# EUROPEAN PATENT APPLICATION

(11) **EP 2 131 260 A1**
(43) Date of publication of application: **09.12.2009**
(21) Application number: 08010332.8
(22) Date of filing: 06.06.2008
(51) Int. Cl.: G05D 16/20

(54) **Apparatus and method for automatic pump control**

(71) Applicant: Zetasistemi S.r.l., 56019 Pisa (IT)
(72) Inventor: Vitarelli, Mario, 56019 Nodica-Vecchiano (IT)
(74) Representative: Celestino, Marco

(57) **Abstract**

A method and an apparatus for automatically controlling a pump 1 for supplying a liquid through a pressurized piping, said method providing steps of: starting pump 1 if the pressure at a point 3 of the piping falls below a first threshold P₁; stopping pump 1 if said pressure falls below a second threshold P₀ attainable in the absence of water, the two thresholds allowing to distinguish a supply condition due to the opening of a valve 21 from a condition of water absence. The method also provides stopping the pump at the end of a supply due to closing of valve 21, the closing identified when the pressure exceeds a threshold value P₂ or when the derivative of the pressure exceeds a threshold value P'₂. In order to actuate the method a device is provided consisting of: a pressure sensor 72 for detecting a pressure lying in a range including said threshold values; a state sensor 70 detecting the state of pump 1; a pump control device 85 for acquiring signals 71 and 73 from sensors 71 and 72; an activation/deactivation device 80 of pump 1 receiving control signals from the control device 85, said sensors and said devices in particular hosted by a common body container arranged close to said piping.

## Description

### Field of the invention

The present invention relates to a method and to an apparatus for automatically controlling a pump connected to a piping for distributing a liquid under pressure, in particular a piping for distributing water, said pump mechanically coupled to a drive suitable for receiving an electric start/stop signal.

### Background of the invention

In liquid transport and distribution installations, devices are frequently used for automatically starting and stopping pumps, in order to restrict pump running periods to delivery request of liquid, thus limiting energy consumption and reducing the occurrence of pump failure.

The release of liquid from a pressurized piping is normally carried out by opening supplying means (e.g. valves or taps), which causes a liquid pressure decrease in the piping, and in particular in pipes between the pump delivery and the supplying means. A pressure decrease can be exploited to start and to stop the pump, by an apparatus comprising a pressure-switch set at a threshold pressure value selected according to pump and piping characteristic, and also comprising a controller which receives a signal from the pressure-switch and generates control signals which are sent to a pump actuation device. If pressure falls below this threshold value, the controller starts up the pump, and stops it when the supplying means is closed, once the supplying carried out, and the pressure exceeds the threshold again.

However, by the above-described procedure, dry run events of the pump may occur. If no liquid is present, the pressure falls down to a very low value, which is smaller than any reasonable pressure set.

The absence of liquid may occur, for example, due to erroneous shutting of a valve at pump suction, or as a result of lack of liquid in a tank or in a well from which the pump withdraws the liquid.

Apart from energy waste, dry-run events is a cause of abnormal overheating and stress of pump components, which increases possibility of failure. Overheating is also a danger, particularly in industrial applications, where the pump may manage a flammable, unstable or anyhow dangerous liquid.

A well known technique to overcome these drawbacks comprises using an apparatus including:
- a pressure-switch, as described above,
- a flow sensor,
- electric circuitry or program means for combining signals from the two instruments and for deciding pump on/off-state. If no flow is detected, the pump is stopped, even if the pressure is lower than the pressure set value.

Pressure/flow-switches are also known, which comprise a pressure sensor and a flow sensor lodged in a common housing, possibly including also means for receiving and combining respective signals from the sensor and from the sensors; in their turn, said means produce signals for closing or opening an electric pump start/stop controlling circuit. In addition to industrial applications, these devices are widely used to control home water distribution system pumps.

However, the well known flow switch and Pressure/flow-switches are normally intrusive tools. They include mechanical parts like blades, propellers, plates, etc, which reduce the area or modify the shape of the passage of the liquid, causing pressure drops which may me not negligible, and creating conditions favourable for sedimentation of solid and precipitation of solutes contained in the liquid, which leads to scale formation. This has some well known drawbacks:
- firstly, a general pumping system performance deterioration, in particular an energy consumption increase;
- secondly, scaling may reduce and even block the passage through for the liquid, which amplifies the above-mentioned drawbacks;
- thirdly, scaling may block flow-switches parts, which can set the device and possibly the pump out of service. A typical case is due to limestone dissolved in aqueduct water;

The above mentioned drawbacks are only partially mitigated by frequent inspections and cleaning operations; moreover, the mechanical parts involve high production costs, considerable size and precise construction for their housing.

In addition, pressure/flow-switches are suitable for preventing dry-run events of the pump but are not suitable for preventing the pump from running when a lekage of water from the piping is present.

### Summary of the invention

It is therefore a feature of the invention to provide a method for automatic controlling a pump connected to a piping for distributing a liquid under pressure, that is suitable for:
- starting the pump in case of request of a supply of liquid by a user,
- preventing dry-running of the pump, without using any flow-switch device or a similar intrusive component, nor restricting the passage section of the liquid.

It is another feature of the invention to provide such a method for automatic control, which can stop the pump when the supply is over.

It is a further feature of the invention to provide such a method, which is also useful for preventing the pump from running in case of leakage of liquid out of the piping.

It is also aim of the invention provide an apparatus suitable to actuate this method, in particular an apparatus easy and cheap to build up and to use.

These and other objects are achieved by an apparatus for automatically controlling a pump for supplying a liquid under pressure, the apparatus comprising:
- a state sensor, the state sensor detecting an on-state or an off-state of the pump, the sensor generating a state signal;
- a pressure sensor, the pressure sensor revealing pressure values of the liquid set in a prefixed range, the pressure sensor generating a pressure signal;
- an on/off switch device of the pump;
- a control device, the control device receiving the state signal and the pressure signal from the state sensor and from the pressure sensor, the control device starting or stopping the pump through the on/off switch device when prefixed-pressure thresholds are crossed by the pressure values,
   whose main feature is that
- the pressure sensor detects pressure values of the liquid and produces pressure signals corresponding to the detected pressure values set in a range including a low-pressure threshold and a very-low-pressure threshold, and that
   the control device comprises a program means for:

- starting the pump if the state signal is an off-state signal and the pressure signal is comprised between the very-low-pressure threshold and the low-pressure threshold;
- stopping the pump if the state signal is an on-state signal and the pressure signal is smaller than the very-low-pressure threshold.

The low-pressure threshold may coincide with a-pressure threshold normally used to start the pump in case of supply of liquid in the piping. In fact, the demand for liquid takes place by opening a liquid supplying means, in particular a valve, which causes a sudden pressure decrease from the pressure value existing in the piping in stand-by conditions, i.e. when supply of liquid is not running. When the pressure drops below the low-pressure threshold, the control device generates an electric pump start control signal; the pumps starts, which slows down or stops the pressure decrease, or even causes a pressure increase up to a stationary value depending on pump and piping characteristics. According to the invention, however, the low-pressure threshold is selected at such a value that it can be easily distinguished from the very-low-pressure threshold, as highlighted below.

The very-low-pressure threshold is a threshold used, according to the invention, to stop the pump if an absence of liquid occurs. In the absence of liquid, the detected pressure drops to very low values. The value of the low-pressure threshold may then be selected about or slightly above the values that can occur in the absence of liquid. When the pressure falls below that threshold, the pump, if running, is stopped.

Advantageously, the pump is stopped when the pump delivery pressure exceeds a predetermined threshold. To this purpose, the low-pressure threshold can also be used to stop the pump when the request and the supply of liquid cease, i.e., when the supplying means is closed, as a rule, in a sudden way. In fact, such event causes a pressure increase, up to a value mainly depending on the head of the pump.

To prevent the pump from intermittent running, advantageously, the stop control signal is issued when the pressure has reached a value somewhat higher than the threshold: this object can be achieved, for example, by providing a timer as a program means of the control device, and stopping the pump an time span after the pressure has reached a stable value above the low-pressure threshold. In particular, a time-delayed stop of the pump is performed in an autonomous and adaptive way by the program through the control device, where a pressure exceeding a prefixed threshold.

Alternatively, the threshold used to stop the pump at the end of a supply can be set different from the threshold used to start the pump. Advantageously, then, the pressure sensor detects pressure values of the liquid set in a range including a high-pressure threshold and the very-low-pressure threshold, and the control device comprises a program means for stopping the pump if the state signal is an on-state signal and the pressure signal is greater than the high-pressure threshold.

The control device may comprise a means, i.e. a trimmer, for changing a threshold, selected from the group comprised of: -the very-low-pressure threshold, - the low-pressure threshold, and, possibly, -the high-pressure threshold.

In order to stop the pump at the end of a supply of liquid, namely in order to identify a supply-end condition, the control device may refer to the speed of pressure increase, together with, or as an alternative to, a pressure threshold. As mentioned above, in fact, the event that marks the end of liquid request is normally a sudden closing of a supplying means, which causes a sudden pressure increase. For this reason the control device includes preferably computing means for calculating a first derivative function with respect to time of a pressure function. This derivative function can be calculated in a period of time as the ratio between
- a pressure increase between the beginning and the end of the period of time,
- the duration of the period of time.

Preferably, the control device includes a program means for stopping the pump if:
- the pump is running and, moreover,
- the pressure is greater than the very-low-pressure threshold, and, moreover,
- the first derivative function is greater than a prefixed positive threshold value.

In particular, the positive threshold of the first derivative is a threshold for starting the pump when a supply of liquid from the piping starts, as it will be more clearly explained in the following description of a method for automatically controlling a pump, and of some embodiments of the invention.

Preferably, the control device includes a program means for preventing the pump from starting if
- the pump is not running, and, moreover,
- the pressure is comprised between the very-low-pressure threshold and the low-pressure threshold, and, moreover,
- the first derivative function has a negative value which is not less than a prefixed negative threshold value.

In particular, the negative threshold is a threshold for stopping the pump in case of leakage of liquid from the piping, as it will be more clearly explained in the following description of a method for automatically controlling a pump, and of some embodiments of the invention.

Using one sensor suitable for detecting pressure values included in a broad range, instead of using a plurality of pressure-switches, allows an easier selection of the values of the two threshold responsive to pump, fluid and piping characteristics, as well as the calculation of the derivative of the pressure function. To this purpose, the control device comprises advantageously a means for changing one or both thresholds of the first derivative of the pressure function, i.e. the positive and the negative thresholds.

In a particular embodiment, the control device includes reset program means for automatic reset program, said automatic reset consisting in starting said pump and in keeping-on said pump for a predetermined period of time, if
- the pump is not running, and, moreover,
- the pressure is smaller than said very-low-pressure threshold, said automatic reset repeated with a prefixed frequency as long as said pressure value is smaller than said very-low-pressure threshold, or until a prefixed maximum number of repetitions of said automatic reset is reached.

Preferably, the control device includes means for changing at least one of the parameters of the automatic reset procedure, namely a) the duration, b) the frequency of repetition, c) the maximum number of repetitions of starting the pump.

Preferably, the control device plans includes also means for signalling and/or recording dry-run events, i.e. means for signalling and/or recording events wherein the pressure remains below the low-pressure threshold after the reset program means have started the pump a number of times equal to the prefixed maximum number.

By the above-described procedure it is possible to restart the pump when liquid absence is due to a temporary or short-to-remove reason, thus limiting the permanent block of the pump to the other cases, wherein the intervention of an operator is preferably required to check the cause of the blockage and to reset the unit by a local reset control signal.

The control device of the apparatus may be a microprocessor, in particular an 8-bit programmable chip, having at least 4 KB flash memory, and at least 256 bytes RAM. In particular, the RAM acquires data from said sensors, from pressure regulation trimmers, through channels, preferably in number of four, equipped with an analog-digital converter.

The activation device can be an electromechanical relay, or a solid state relay.

In a particular embodiment, the pressure sensor and control device, and possibly the activation device, are arranged in a common container body, and the container body comprises a means for fixing said container body to a pipe or to a carpentry or to soil.

Preferably, the pressure sensor is a ceramic-type sensor.

The objects of the invention are also achieved by a method for automatically controlling a pump, the pump connected to a piping for distributing a liquid under pressure, the method comprising the steps of:
- installing a sensor suitable for detecting an on-state and an off-state of the pump, and suitable for generating a state signal of the pump,
- selecting a point on the piping where the pressure decreases in a known way due to a supply of the liquid from the piping;
- installing a pressure sensor at the point, the pressure sensor suitable for detecting pressure values of the liquid comprised in a range including a low-pressure threshold and a very low-pressure threshold, and also suitable for generating a pressure signal,
- selecting a low-pressure threshold for starting the pump in case of supply of the liquid from the piping,
- selecting a very low-pressure threshold for stopping the pump in case of absence of the liquid,
- automatically starting and stopping the pump by means of the signals generated by the sensors; the main feature of the method is that additional steps are provided of:

- starting the pump if the pump is not running and the pressure is between the low-pressure threshold and the very low-pressure threshold;
- stopping the pump if the pump is not running and the pressure is smaller than the very low-pressure threshold.

Preferably, the method also provides a step of selecting a high-pressure threshold for stopping the pump in case of end of a supply of the liquid from the pressurized piping, in which case the pressure sensor must be suitable for detecting pressure values of the liquid comprised in a range including also the high-pressure threshold as well as the very low-pressure threshold, and the control device must comprise a program means for stopping the pump if the pressure is greater than the high-pressure threshold.

Advantageously, the program means stop the pump in an autonomous and adaptive way by the program through the control device.

Advantageously, the method comprises also a calculation step for calculating a first derivative function of a pressure function with respect to time, and at least a procedure is provided selected from the group comprising a procedure a) and a procedure b), the procedure a) comprising steps of:
- selecting a positive threshold value for stopping the pump in case of end of a supply of the liquid from the piping,
- stopping the pump if:
- the pump is running, and, moreover,
- the pressure is greater than the very-low-pressure threshold, and, moreover,
- the first derivative is greater than the positive threshold value,
   the procedure b) including a step of:
- selecting a negative threshold value for preventing the pump from starting in case of leakage of liquid from the piping if:
- the pump is not running, and, moreover,
- the pressure is comprised between the very-low-pressure threshold and the low-pressure threshold, and, moreover,
- the first derivative function has a negative value which is not less than the prefixed negative threshold value.

In particular, the positive threshold is selected in such a way that it can be used to stop the pump when a liquid supply from the piping is turned off, which is decided by an operator by sudden turning off a tap or a valve. In this case, the pressure increases normally in a faster way, therefore with a higher derivative value, than in other cases in which the pressure also increases, for example, than in the case of initial piping filling and pressurizing. Then, if the positive threshold is properly selected, the first derivative function allows the control device to distinguish an end-of-supply event from a piping filling and pressurization.

In particular, the negative threshold is selected in such a way that it can be used to prevent the pump from starting in case of leakage of liquid from the piping. Without such program means, a leakage may lead to a pressure decrease down to values lower the low-pressure threshold, which would cause the pump to start and, ultimately, would cause a pump intermittent operation. In this case, the pressure increases normally more slowly, therefore with a lower derivative absolute value, than in other cases in which the pressure decreases, in particular than in the case of a start of a supply of liquid. Then if the negative threshold is properly selected, the first derivative function allows the control device to distinguish the situation of leakage from the start of a supply of liquid.

Therefore, the calculation of the derivative of the pressure, and the comparison of this derivative with properly selected threshold values, a positive and a negative one, allows the control device
a) to distinguish a liquid end-of-supply situation from the piping pressurization, and to stop the pump only in the first situation;
b) to distinguish a of leakage situation from the start of supply of liquid from the piping, preventing the pump from starting in the first case.

For example, the first derivative function of the pressure function may be evaluated in a period of time as the ratio between
- a pressure increase between the beginning and the end of the period of time,
- the duration of the period of time.

Preferably, the very low-pressure threshold is set in a between 0.1 and 0.6 bar, while the low-pressure threshold is set between 1.5 and 2.5 bar.

Advantageously, a step is provided of fixing
- a period of time,
- a frequency,
- a maximum number of repetitions, and a procedure is also provided of automatically resetting, comprising the steps of:

- starting the pump if
- the state signal is an off-state signal, and, moreover,
- the pressure signal is smaller than the very low-pressure threshold,
- keeping on the pump during the period of time,
- repeating the step of starting and the step of keeping on with the frequency, and
- until the prefixed maximum number of repetitions of the automatic reset is reached, or
- as long as the pressure value is smaller than the very-low-pressure threshold.

Preferably, the period of time, during which is set between 4 and 6 seconds.

Advantageously, the method provides a step of signalling and/or recording dry-run events, i.e. a step of signalling and/or recording events wherein the pressure keeps below the very-low-pressure threshold after that the maximum number of repetitions of reset procedure has been reached.

This way, the method allows to restart the pump when liquid absence is due to a temporary or short-to-remove reason, thus limiting the permanent block of the pump to the other cases, wherein the intervention of an operator is preferably required to check the cause of the blockage and to reset the unit by a local reset control signal.

### Brief description of the drawings

The invention will be made clearer with the following description of an exemplary embodiment thereof, exemplifying but not limitative, with reference to the attached drawings wherein:
- figures 1 and 2 show two body structures of the apparatus according to the invention;
- figure 3 is a schematic representation of a first embodiment of the apparatus according to the invention;
- figure 4 is a diagram showing pressure threshold values, used by the apparatus represented in figure 3;
- figure 5 is a schematic representation of a second embodiment of the apparatus according to the invention;
- figure 6 is a diagram showing pressure threshold values, used by the apparatus represented in figure 5;
- figure 7 is a schematic representation of a third embodiment of the apparatus according to the invention;
- figures 8A, 8B and 8C are diagrams showing threshold values of the pressure and of the derivative of the pressure function, used by the apparatus represented in figure 7;
- figure 9 is a flow-chart showing the steps of the method according to the invention.

### Description of preferred exemplary embodiments

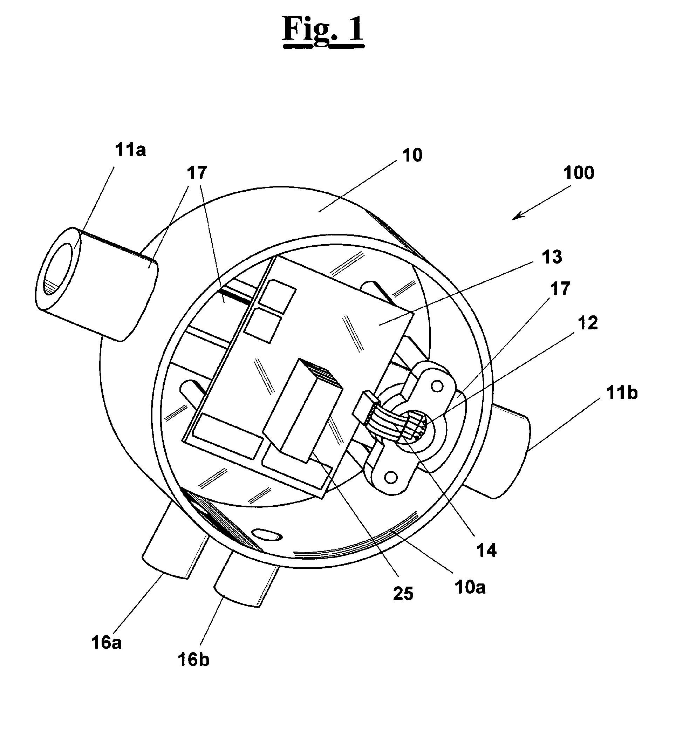

Figure 1 shows an apparatus 100, according to the invention, for controlling a pump connected to a piping for distributing a liquid. The apparatus is housed in a plastic container body 10, and has two connections 11a and 11b, having the same shape and the same size, to provide an inlet and an outlet port for the liquid. These connections define a tubular element 17 communicating with a membrane, not visible in the picture, of a pressure sensor 12, which transfers a pressure signal to the control device 15, integral to the chip 13, by means of the wiring 14. Two further connections 16a and 16b are provided for passage of cables, not represented, for powering the apparatus and the for controlling the pump. The body 10 has an internal thread 10A suitable for engaging an external thread of a cover not represented.

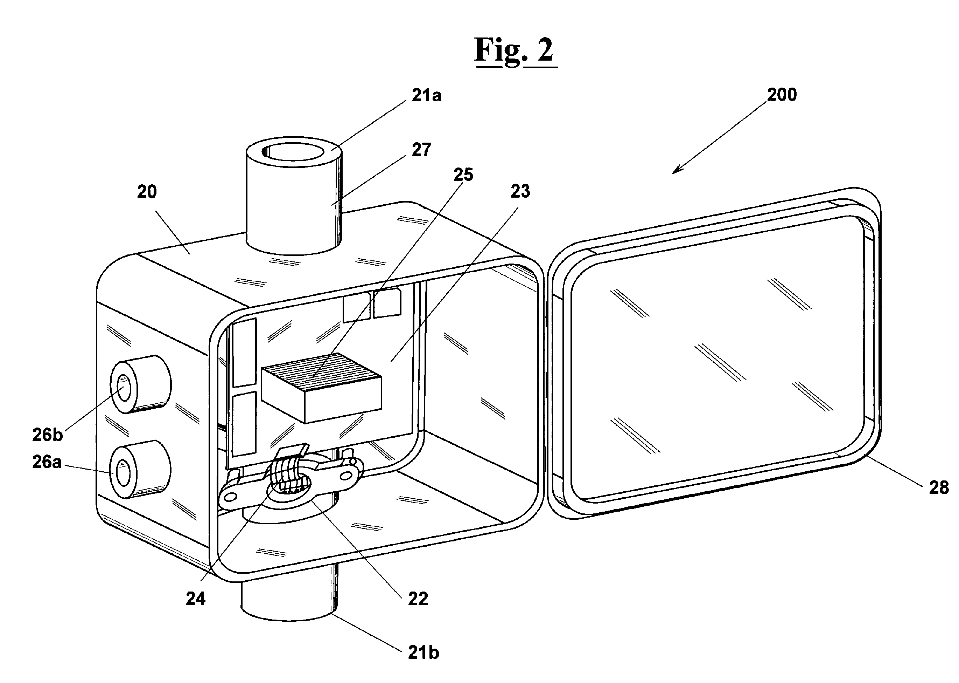

Figure 2 shows an apparatus 200 which differs from the previously described one in that it has a quadrangular shaped container body 20 instead of a round shaped one, and it has also a closing device consisting of a door 28 integral to the the body 20. The connections 21a and 21b, providing an inlet and an outlet port for the liquid, define a tubular element 27 which communicates with a membrane, not visible in the picture, of a pressure sensor 22. This transfers a pressure signal to the control device 25, integral to the chip 23, by means of the wiring 24 The device 25 receives also the state signal of the pump, and transfers on/off control signals to the pump by means of cables not represented, for which connections 26a and 26b are provided on one side of the container body 20.

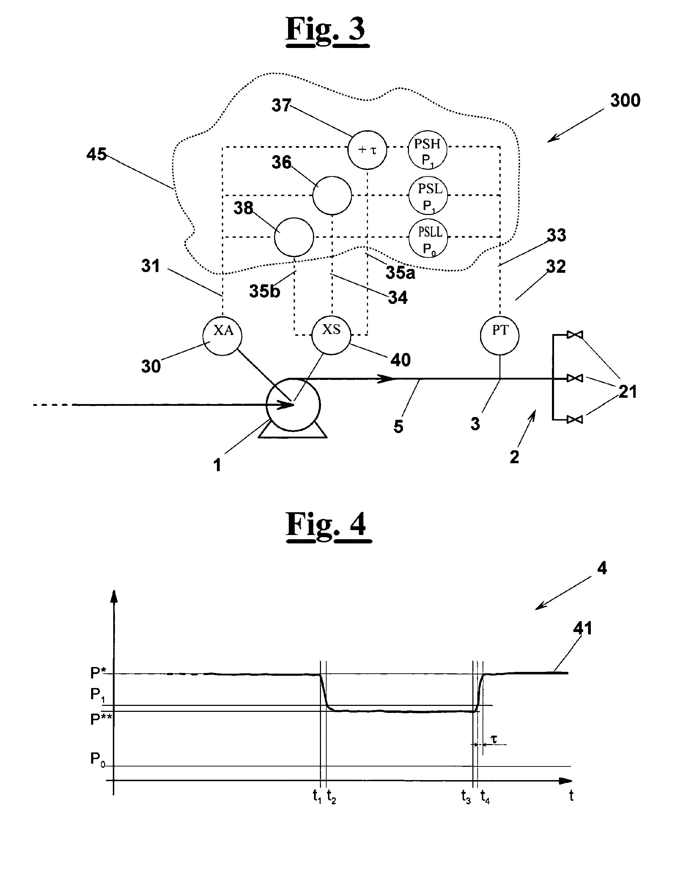

With reference to figures 3 and 4, a device 300 is described, according to an embodiment of the invention, for automatically controlling a pump 1 connected in a piping 2 such as for distributing drinking water by means of supplying valves 21. The apparatus comprises:
- a state sensor 30 or XA, suitable for delivering an on/off signal 31 of the pump,
- a pressure sensor-transmitter 32 or PT installed at a point 3 of the delivery pipe 5 of pump 1, suitable for detecting pressures comprised within a range including the threshold values P₀ and P₁ (Figure 4), and for delivering a pressure signal 33,
- an activating device 40 or XS of the pump 1 comprising an electromechanical relay,
- a control device 45 for controlling pump 1 suitable for receiving the signal 31 and the signal 33, and 33, and equipped with
- PSLL means for making a comparison of signal 33 with the threshold value P₀
- a means PSL and PSH for making a comparison with the threshold value P₁,
- a means 36 for generating a start control signal 34 for the activating device 40 of the pump 1, when the state signal 31 is an off-signal and the pressure signal indicates a value of smaller than P₁,
- a means 37 for generating a stop control signal 35a for the activating device 40 of the pump 1, when the state signal 31 is an on-signal and after an period of time τ since last time the pressure signal has assumed a value greater than P₁,
- a means 38 for generating a stop control signal 35b for the activating device 40 of the pump 1, when the state signal 31 is an on-signal and the pressure signal indicates a value smaller than P0,
where P1 is a value selected on the basis of the head of pump 1 and P₀ is 0.5 bar, i.e. a value lower than any attainable pressure value under normal operating conditions of the piping 2.

The apparatus 300 allows automatically starting and stopping of pump 1 at the beginning and at the end of a request of liquid, and allows also stopping the pump 1 in case of liquid absence in piping 2; the operation of this equipment is as follows. At a time t1, a valve 21 is opened, which causes a sudden pressure decrease, as indicated by the curve 41 of diagram 4 (Figure 4). At a time t₂, after t₁, the low-pressure threshold P₁ is reached, and a means 36 resident in the control device 45 of pump 1 emits a start control signal 34 for the activation device 40. Therefore, the pump 1 is started and the pressure decrease slows down, as the slope change of curve 41 at time t₂ indicates; the pressure stabilizes at a stationary value P**, depending on characteristics of the pump 1 and of the piping 2. The supply of liquid from the piping 2 continues until a time t₃ is reached, when the valve 21 is closed. As a consequence, a sudden pressure increase occurs, and a time t₄, immediately after t₃, the pressure reaches the value P₁ again; this time the value P₁ is used as a high-pressure threshold for stopping the pump, in association with a timer resident in the means 37. In other words, a time τ after t₃ a stop control signal the 35a is generated and sent to the activating device 40. After stopping the pump 1, pressure falls back to the stand-by P* value , depending on of pump 1 head. The delay τ with which the stop control signal 35a is generated is intended to avoid intermittent operation of pump 1.

The apparatus 300 is also suitable for preventing the pump 1 from running in the absence of liquid in the piping 2. In these circumstances, as a consequence of the opening of the valve 21 or of a leakage of liquid from the piping, the pressure in the piping drops to a very-low value, not represented in figure 4, smaller than the very-low-pressure threshold value of P₀, and the means 38, resident in the control device 45 of pump 1 emits a stop control signal 35b and sends it to the activation device 40, so that the pump 1 is stopped.

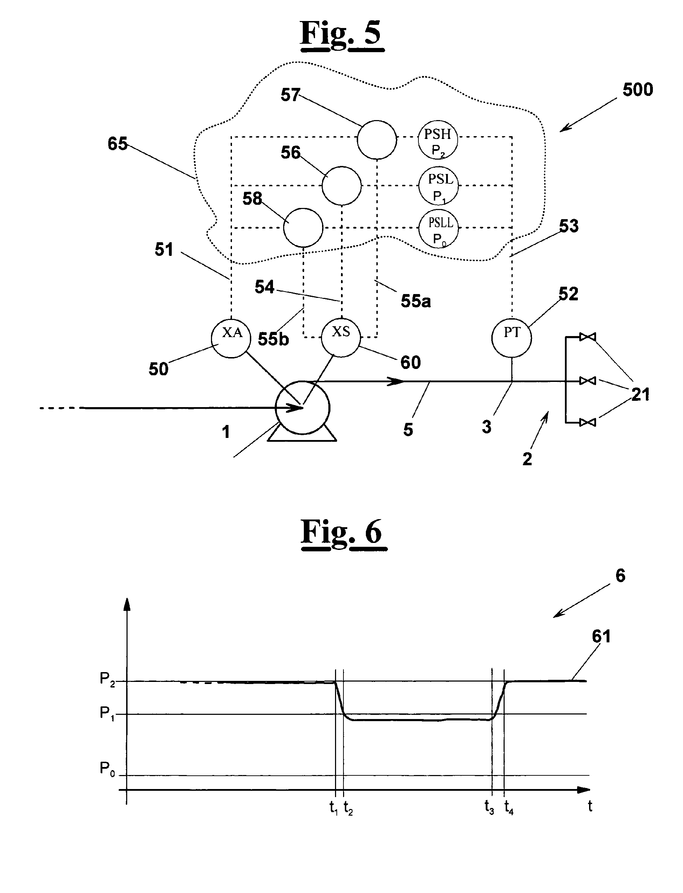

With reference to figures 5 and 6, an apparatus 500 is described, according to another embodiment of the invention, for automatically controlling a pump 1 connected to a piping 2 for distributing drinking water by means of supplying valves 21. The apparatus comprises:
- a state sensor 50 or XA, suitable for delivering a pump on/off-state signal 51,
- a pressure sensor-transmitter 52 or PT installed at a point 3 of the delivery pipe 5 of pump 1, suitable for detecting pressures comprised in a range that includes the thresholds values P₀, P₁ and P₂ (figure 6), and for providing a pressure signal 53,
- an activating device 60 or XS of the pump 1 comprising an electromechanical relay,
- a control device 65 for controlling pump 1, suitable for receiving the signal 51 and the signal 53 and equipped with
- a means PSLL for making a comparison between the signal 53 with the threshold value P0
- a means PSL for making a comparison with the threshold value of P1,
- a means PSH making a comparison with the threshold value of P2,
- a means 56 for generating and sending a start control signal 54 to the device 60 for activating the pump 1, when the state signal 51 is as an off-state signal and the pressure signal indicates a value smaller than P1,
- a means 57 for generating and sending a stop control signal 55b to the activating device 60 of the pump 1, when the state signal 51 is an on-state signal and the pressure signal has a value greater than P2,
- a means 58 for generating and sanding a stop control signal 55b to the activating device 60 of the pump 1, when the state signal 51 is an on-state signal and the pressure signal indicates a value smaller than P0,
   wherein P₁ is a value selected on the basis of the head of pump 1 and P₀ is 0.5 bar, i.e. a value lower than any pressure value attainable under normal operating conditions of piping 2.

The apparatus 500 allows automatically starting and stopping the pump 1 at the beginning and at the end of a liquid supply, and also allows stopping the pump 1 in the absence of liquid in the piping 2. The apparatus operation is as follows. At a time t1, a valve 21 is opened, which causes a sudden pressure decrease, as indicated by the curve 61 of diagram 6 (Figure 6). At a time t₂, after t₁, the low-pressure threshold P₁ is reached, and a means 56 resident in the control device 65 of pump 1 emits a start control signal 54 for the activation device 40. Therefore, the pump 1 is started and the pressure decrease slows down, as the slope change of curve 61 at time t₂ indicates; the pressure stabilizes at a stationary value P*, depending on pump 1 and piping 2 characteristics. The supply of liquid from the piping 2 goes on until a time t₃ is reached, at which time the valve 21 is closed. As a consequence, a sudden pressure increase occurs, and at a time t₄, immediately after t₃, the pressure reaches the value P₂, and means 57 resident in the control device 65 of pump 1 generates a stop control signal 55a for the activation device 60. After stopping the pump 1, the pressure stabilizes around P₂ value, which is therefore also the pressure stand-by value in the piping, except for losses.

The apparatus 500 is also suitable for preventing the pump 1 from running in the absence of liquid in the piping 2. In these circumstances, as a consequence of the opening of the valve 21 or of a leakage of liquid from the piping, the pressure in the piping drops to a very-low value, not represented in figure 6, smaller than the very-low-pressure threshold value of P₀, and the means 58, resident in the control device 65 of pump 1 emits a stop control signal 55b and sends it to the activation device 60, so that the pump 1 is stopped.

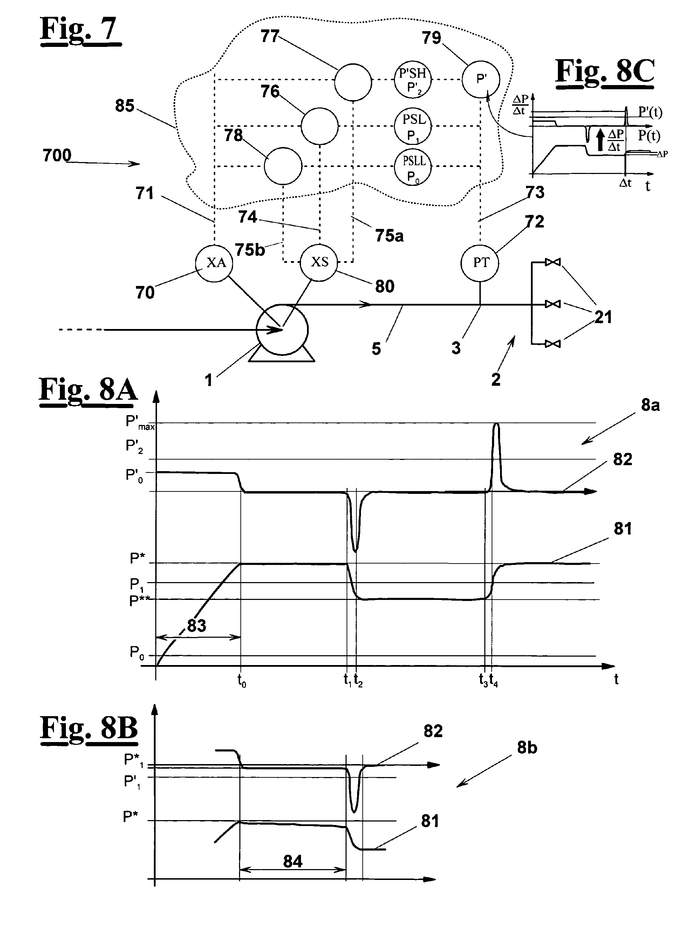

With reference to figures 7 and 8A÷C, an apparatus 700 is described, according to a further embodiment of the invention, for automatically controlling a pump 1 connected to a piping 2 for distributing drinking water by means of supplying valves 21. The apparatus comprises:
- a state sensor 70 or XA, suitable for delivering a pump on/off-state signal 71,
- a pressure sensor-transmitter 72 or PT installed at a point 3 of the delivery pipe 5 of pump 1, suitable for detecting pressures comprised in a range that includes the thresholds values P₀, P₁ and P₂ (figure 8A), and for providing a pressure signal 73,
- an activating device 80 or XS of the pump 1 comprising an electromechanical relay,
- a control device 85 for controlling pump 1, suitable for receiving the signal 71 and the signal 73 and equipped with
- a means 79 for calculating a first derivative function of the pressure function;
- a means PSLL for making a comparison between the signal 73 with the threshold value P₀
- a means PSL for making a comparison between the signal 73 with the threshold value P₁,
- a means P'SH for making a comparison between the value of the first derivative function of the pressure with the threshold value of P'₂,
- a means 76 for generating and sending a start control signal 74 to the device 80 for activating the pump 1, when the state signal 71 is as an off-state signal and the pressure signal indicates a value smaller than P₁,
- a means 77 for generating and sending a stop control signal 75b to the activating device 80 of the pump 1, when the state signal 71 is an on-state signal and the value of the first derivative function of the pressure is greater than the threshold value P'₂,
- a means 78 for generating and sanding a stop control signal 75b to the activating device 80 of the pump 1, when the state signal 71 is an on-state signal and the pressure signal indicates a value smaller than P₀,
   wherein P₁ is a value selected on the basis of the head of pump 1 and P₀ is 0.5 bar, i.e. a value lower than any pressure value attainable under normal operating conditions of piping 2.
   The apparatus 700 allows automatically starting and stopping the pump 1 at the beginning and at the end of a liquid supply, and also allows stopping the pump 1 in the absence of liquid in the piping 2. The apparatus operation is as follows. At a time t₁, a valve 21 is opened, which causes a sudden pressure decrease, as indicated by the curve 81 of diagram 8A (Figure 8A). At a time t₂, after t₁, the low-pressure threshold P₁ is reached, and a means 76 resident in the control device 75 of pump 1 emits a start control signal 74 for the activation device 80. Therefore, the pump 1 is started and the pressure decrease slows down, as the slope change of curve 81 at time t₂ indicates; the pressure stabilizes at a stationary value P**, depending on pump 1 and piping 2 characteristics. The supply of liquid from the piping 2 goes on until a time t₃ is reached, at which time the valve 21 is closed. As a consequence, a sudden pressure increase, as well as a sudden increase of the derivative function of the pressure, as the curve 82 of diagram 8 indicates. At a time t₄, immediately after t₃, the derivative reaches the value P'₂, and means 77 resident in the control device 85 of pump 1 generates a stop control signal 75a for the activation device 80. After stopping the pump 1, thee pressure falls back to the stand-by P* value, depending on of pump 1 head. Figure 8A also shows how to properly select the maximum positive threshold value P'₂, which is greater than P'₀, - almost constant - which builds up during a step 83 of filling the piping 2.
   How schematically represented in figure 8C, the means 79 calculates the first derivative function of the pressure, regularly sampling values of the pressure signal 73, and computing between every consecutive sampling times the difference quotient ΔP/Δt. By the means 79 for calculating the first derivative of pressure, and by means not represented for comparing this derivative with a proper maximum negative threshold value P'₁, the apparatus 700 can also prevent the pump from starting in case of depressurization due to leakage of liquid, which can occur, particularly during a stand-by period 84, i.e. when the piping is not supplying liquid nor being filling and pressurized. This stand-by period is represented in the diagram 8B of figure 8B. The control device 85 carries out a comparison of the first derivative 82 with the maximum negative threshold value P'₁; as long as the first derivative 82 is negative and is not smaller than this threshold value P'₁, the control device 85 inhibits the pump 1 from starting. Figure 8B also shows how to properly select the maximum negative threshold value P'₁, which is smaller than P'*, a typical value occurring in case of liquid leakage or small loss, corresponding to the derivative - almost constant - which builds up during a stand-by period 84.

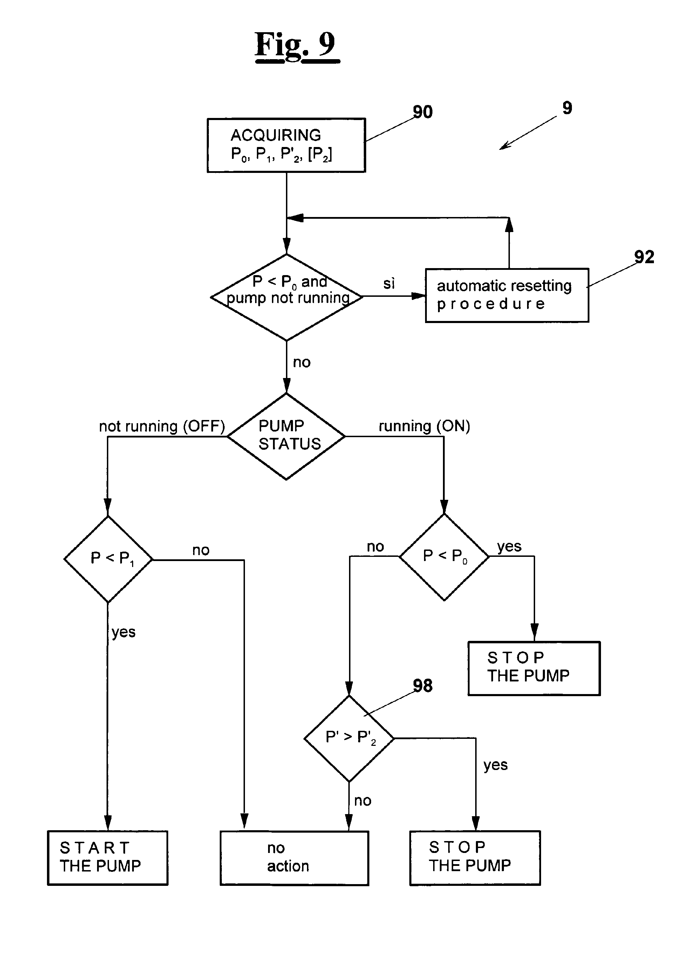

   In figure 9 it is reproduced a flow chart of the method according to the invention, in particular of the method according to the embodiment 700 of figure 7 and 8A-C, wherein it is also provided
- a step 90 of acquiring or reading the threshold values P₀, P₁ and P'₂, used by the control device 85 to decide the issue of start/stop control signal for the pump 1;
- an automatic resetting procedure 92, to be performed when the pressure is smaller than the very-low-pressure threshold value P₀ (no water), and consisting in repeating at regular intervals short running steps of pump 1, for a prefixed time or for a prefixed number of repetition.

The diagram 9 is also a representation of the embodiment 300, provided that the inequality 98 is replaced with the pair of inequalities (P> P1 t-t₃>τ); and of the embodiment 500, provided that the inequality 98 is replaced with the inequality P>P₂.

The foregoing description of a specific embodiment will so fully reveal the invention according to the conceptual point of view, so that others, by applying current knowledge, will be able to modify and/or adapt for various applications such an embodiment without further research and without parting from the invention, and it is therefore to be understood that such adaptations and modifications will have to be considered as equivalent to the specific embodiment. The means and the materials to realise the different functions, described herein could have a different nature without, for this reason, departing from the field of the invention. It is to be understood that the phraseology or terminology employed herein is for the purpose of description and not of limitation.

## Claims

1. An apparatus for automatically controlling a pump for supplying a liquid under pressure, said apparatus comprising:
- a state sensor, said state sensor detecting an on-state or an off-state of said pump, said sensor generating a state signal,
- a pressure sensor, said pressure sensor revealing pressure values of said liquid set in a prefixed range, said pressure sensor generating a pressure signal,
- an on/off switch device of said pump,
- a control device, said control device receiving said state signal and said pressure signal from said state sensor and from said pressure sensor, said control device starting or stopping said pump through said on/off switch device when prefixed-pressure thresholds are crossed by said pressure values,
**characterized in that**
- said pressure sensor detects pressure values of said liquid and produces pressure signals corresponding to said detected pressure values set in a range including a low-pressure threshold and a very-low-pressure threshold, and **in that** said control device comprises a program means for
- starting said pump if said state signal is an off-state signal and said pressure signal is comprised between said very-low-pressure threshold and said low-pressure threshold,
- stopping said pump if said state signal is an on-state signal and said pressure signal is smaller than said very-low-pressure threshold.

2. An apparatus according to claim 1, wherein said pressure sensor detects pressure values of said liquid set in a range including a high-pressure threshold and said very-low-pressure threshold, and said control device comprises a program means for stopping said pump if said state signal is an on-state signal and said pressure signal is greater than said high-pressure threshold.

3. An apparatus according to claim 1, wherein said control device includes computing means for calculating a first derivative function with respect to time of a pressure function.

4. An apparatus according to claim 3, wherein the control device includes a program means for stopping said pump when:
- said state signal is an on-state signal, and, moreover,
- said pressure signal is greater than said very-low-pressure threshold, and, moreover,
- said first derivative function is greater than a prefixed positive threshold value.

5. An apparatus according to claim 3, wherein said control device includes a program means for preventing said pump from starting when:
- said state signal is an off-state signal, and, moreover,
- said pressure signal is comprised between said very-low-pressure threshold and said low-pressure threshold, and, moreover,
- said first derivative function has a negative value which is not less than a prefixed negative threshold value.

6. An apparatus according to the previous claims, wherein the control device includes a means for changing a threshold, and wherein said threshold is selected in the group comprised of:
- said very-low-pressure threshold,
- said low-pressure threshold,
- said high-pressure threshold,
- said prefixed positive threshold value of said first derivative function,
- said prefixed negative threshold value of said first derivative function.

7. An apparatus, according to claim 1, wherein the control device includes automatic reset program means, said automatic reset consisting of starting said pump and keeping said pump on for a predetermined period of time, when
- said state signal is an off-state signal, and, moreover,
- said pressure signal is smaller than said very-low-pressure threshold, said automatic reset repeated with a prefixed frequency as long as said pressure value is smaller than said very-low-pressure threshold, or until a prefixed maximum number of repetitions of said automatic reset is reached.

8. An apparatus according to claim 7, wherein said control device includes means for changing a parameter selected from the group comprised of:
- said predetermined period of time,
- said frequency of said automatic reset,
- said maximum number of repetitions of said automatic reset.

9. An apparatus, according to the claim 7, wherein said control device comprises:
- alarm means for signalling pump dry-run events, or
- recording means for recording pump dry-run events, or a combination thereof, said dry-run events occurring when said pressure value keeps smaller than said very low-pressure threshold after said maximum number of repetitions of said automatic reset.

10. An apparatus, according to claim 1, wherein said pressure sensor and said control device are arranged in a common container body, said container body comprising means for fixing said container body to a pipe or to a carpentry or to soil.

11. A method for automatically controlling a pump, said pump connected to a piping for distributing a liquid under pressure, said method comprising the steps of:
- installing a sensor suitable for detecting an on-state and an off-state of said pump, and suitable for generating a state signal of said pump,
- selecting a point on said piping where the pressure decreases in a known way due to a supply of said liquid from said piping,
- installing a pressure sensor at said point, said pressure sensor suitable for detecting pressure values of said liquid comprised in a predetermined range,
- setting on automatically starting and stopping of said pump by means of said signals generated by said sensors,
**characterized in that additional** steps are provided of:
- selecting a low-pressure threshold in said range for starting said pump in case of supply of said liquid from said piping,
- selecting a very low-pressure threshold in said range for stopping said pump in case of absence of said liquid,
- starting said pump if said state signal is an off-state signal and said pressure signal is between said low-pressure threshold and said very low-pressure threshold,
- stopping said pump if said state signal is an on-state signal and said pressure signal is smaller than said very low-pressure threshold.

12. A method according to claim 11, wherein
- a step is also provided of selecting a high-pressure threshold for stopping said pump in case of end of a supply of said liquid from said piping,
- said pressure sensor is suitable for detecting pressure values of said liquid comprised in a range including said high-pressure threshold and said very low-pressure threshold,
- said control device comprises a program means for stopping said pump if said pressure signal is greater than said high-pressure threshold.

13. A method, according to claim 11, wherein
- a calculation step is provided for calculating a first derivative function of a pressure function with respect to time, and at least a procedure is provided selected from the group comprising a procedure a) and a procedure b), said procedure a) comprising steps of:
- selecting a positive threshold value for stopping said pump in case of end of a supply of said liquid from said piping,
- stopping said pump if:
- said state signal is an on-state signal, and, moreover,
- said pressure signal is greater than said very-low-pressure threshold, and, moreover,
- said first derivative is greater than said positive threshold value, said procedure b) including a step
- selecting a negative threshold value for preventing said pump from starting in case of leakage of liquid from said piping if:
- said state signal is an off-state signal stopping, and, moreover,
- said pressure signal is comprised between said very-low-pressure threshold and said low-pressure threshold, and, moreover,
- said first derivative function has a negative value which is not less than said prefixed negative threshold value.

14. A method, according to claim 11, wherein it is provided a step of fixing of:
- a period of time,
- a frequency,
- a maximum number of repetitions, and a procedure is also provided of automatic reset comprising the steps of:
- starting of said pump if
- said state signal is an off-state signal, and, moreover,
- said pressure signal is smaller than said very low-pressure threshold,
- keeping on said pump during said period of time,
- repeating said step of starting and said step of keeping said frequency, either until said prefixed maximum number of repetitions of said automatic reset is reached, or as long as said pressure value is smaller than said very-low-pressure threshold.

15. A method according to claim 11 or 14, wherein said very-low-pressure threshold is set between 0.1 and 0.6 bar, and said low-pressure threshold is set between 1, 5 and 2.5 bar and said period of time is set between 4 and 6 seconds.
